(19)

Europäisches
Patentamt
European
Patent Office
Office européen
des brevets

(11) **EP 2 384 881 B1**

(12) **EUROPEAN PATENT SPECIFICATION**

(45) Date of publication and mention
of the grant of the patent:
**22.08.2012 Bulletin 2012/34**

(21) Application number: **11160390.8**

(22) Date of filing: **30.03.2011**

(51) Int Cl.:
*B29C 65/10* (2006.01)     *B32B 5/26* (2006.01)
*B32B 37/06* (2006.01)     *B32B 37/14* (2006.01)
*D04H 1/50* (2012.01)     *D04H 1/54* (2012.01)
*D04H 1/559* (2012.01)     *D04H 1/542* (2012.01)

(54) **Nonwoven fabric having stretchability, and process for producing the same**

Vliesstoff mit Dehnbarkeit und Herstellungsverfahren dafür

Étoffe non tissée dotée d'étirabilité et son procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2010 JP 2010092577**

(43) Date of publication of application:
**09.11.2011 Bulletin 2011/45**

(73) Proprietors:
• **Chisso Corporation
Kita-ku
Osaka-shi
Osaka (JP)**
• **JNC Fibers Corporation
Tokyo (JP)**

(72) Inventors:
• **Terada, Hirokazu
Shiga 524-0001 (JP)**
• **Fujiwara, Toshikatsu
Shiga 524-0001 (JP)**

(74) Representative: **HOFFMANN EITLE
Patent- und Rechtsanwälte
Arabellastrasse 4
81925 München (DE)**

(56) References cited:
WO-A1-97/02130     DE-A1- 3 837 685
US-A- 5 491 016     US-A- 6 066 221
US-A1- 2002 068 150     US-A1- 2003 134 094

**Description**

BACKGROUND OF THE INVENTION

1. Field of the Invention

The present invention relates to a nonwoven fabric having stretchability, a process for producing the same, and a product using the nonwoven fabric. More specifically, it relates to a nonwoven fabric capable of exhibiting the stretchability in all directions regardless of the directions of MD (Machine direction) and CD (Cross direction). Also, it relates to a nonwoven fabric showing a convex structure protruded on the nonwoven fabric surface to which with bulkiness, flexibility, and air permeability are added.

2. Brief Description of the Background Art

As a method for obtaining a nonwoven fabric having stretchability, a method comprising by laminating an elastomer resin on a conveyer by a melt-blow method and bonding them using a hot roll to obtain a sheet is common. However, since bulkiness of the obtained sheet is very low, it has low air permeability and an impaired texture. Moreover, there is a problem that surface smoothness is poor due to friction which is peculiar to an elastomer resin.

Furthermore, as a method for subjecting a thermal treatment after nonwoven fabric formation to cause shrinking, and imparting strechability in the structure of the nonwoven fabric, there is a method comprising entangling a web composed of a fiber having latent crimpability by jet water stream, performing. However, in this case, since fibers themselves are strongly entangled when the entanglement with the water stream is hard, shrinkage property cannot be sufficiently imparted at a later shrinking step and therefore stretchability is impaired. Contrary, when the entanglement is soft, stretchability can be sufficiently imparted. However, in this case, there is a problem that strength of the nonwoven fabric remarkably decreases.

As the other method, there is a method wherein two layers of a stretchable web and a non-stretchable web are point-bonded by a hot emboss roll and then the stretchable layer is shrunk using a heating apparatus to impart bulkiness and stretchability. In this case, since the emboss-pressed part is transformed into a film form, there are problems that air permeability is impaired and also stretchability is impaired at that part.

Moreover, in order to provide bulkiness and flexibility together with a sufficient strength with a nonwoven fabric, there is a point-through-air processing method wherein processing is performed using a hot-air through-air processing method wherein regions where hot air is allowed to penetrate through a heat-bondable conjugate fiber web and regions with which hot air does not come into contact are present in a mixed state. As described in Patent Document 4, the point-through-air processing method of a nonwoven fabric is a processing method utilizing a hot-air processing machine (suction band drier).

US 2003/0134094 describes a multi-layer composite sheet comprising a shrinkable layer intermittently bonded to a gatherable layer with the bonds separated by a specified distance. The shrinkable layer can shrink and at the same time gather the gatherable layer between the bonds. US 5491016 reveals a heat shrinkable nonwoven fabric including outer layers of thermoplastic staple fibers and an inner layer containing heat shrinkable fibers. The layers are point bonded together at spaced locations without causing shrinkage of the hat shrinkable fibers. US 6066221 describes a hot air knife assembly and process for thermally increasing the integrity of a nonwoven polymer web. A nonwoven web is passed beneath a plurality of spaced apart hot air knife zones which permit the jetting of hot air at a multiplicity of discrete, spaced apart locations across the width of a nonwoven web.

Citation List
Patent Literature
Patent Literature 1 : JP-A-2009-256856
Patent Literature 2 ; JP-A-10-114004
Patent Literature 3 : JP-A-2006-45724
Patent Literature 4 : JP-A-2001-3253

SUMMARY OF THE INVENTION

An object of the invention is to solve the above-described problems and to provide a stretchable nonwoven fabric which has concavo-convex structure on the surface, is bulky and highly flexible, has air permeability, and is capable of exhibiting stretchability in all directions regardless of the directions of MD and CD.

As a result of extensive studies for solving the above problems, the inventors have found that a nonwoven fabric obtained by partly integrating specific two web layers having different shrinking ratios without press-flattening the layers and further subjecting the resulting nonwoven fabric to a thermal treatment solves the above-described problems.

Thus, they have accomplished the present invention based on the finding.

BRIEF DESCRIPTION OF THE DRAWINGS

[Fig. 1] Fig. 1 is a plane schematic view of a laminated article of the fiber layer (1) and the fiber layer (2) before heat-shrink processing.
[Fig. 2] Fig. 2 is a cross-sectional schematic view of a laminated article of the fiber layer (1) and the fiber layer (2) before heat-shrink processing.
[Fig. 3] Fig. 3 is a plane schematic view of a laminated article of the fiber layer (1) and the fiber layer (2) after heat-shrink processing.
[Fig. 4] Fig. 4 is a cross-sectional schematic view of a laminated article of the fiber layer (1) and the fiber layer (2) after heat-shrink processing,
[Fig. 5] Fig. 5 is a cross-sectional schematic view of an example of a laminated article where there is no concavo-convex structure before heat-shrink processing.
[Fig. 6] Fig. 6 is a cross-sectional schematic view of an example of a laminated article where there is a slight concavo-convex structure before heat-shrink processing.
[Fig. 7] Fig. 7 is a cross-sectional schematic view of an example of a laminated article where a difference in thickness of concavo-convex structure becomes remarkable after heat-shrink processing.

Reference Signs List

1 Fiber layer (1) before heat-shrink processing
2 Fiber layer (2) before heat-shrink processing
1' Fiber layer (1) after heat-shrink processing
2' Fiber layer (2) after heat-shrink processing
3 Heat-bonded part (a site where the intersecting point of the heat-bondable fibers is bonded)
4 Interval between the heat-bonded parts (site where the intersecting point of the heat-bondable fibers is not bonded)
4' Interval between the heat-bonded parts after heat-shrink processing (convex structure-formed part)
5 Heat-jointed region (heat-jointed face at interface between the fiber layer (1) and the fiber layer (2))
6 Vacant part

$X_1$-$X_1$' and $X_2$-$X_2$' Cross-section place of the nonwoven fabric

DETAILED DESCRIPTION OF THE INVENTION

The present invention relates to the following (1) to (5):

(1) A stretchable nonwoven fabric, comprising a fiber layer (1) containing a heat-bondable fiber and a fiber layer (2) containing a conjugate fiber which comprises a conjugate fiber composed of resin components different from each other wherein the fiber layer (2) is laminated to at least one surface of the fiber layer (1), both fiber layers are integrated, the fibers of both fiber layers were no press-flattened at heat-bonded parts which is partly formed by heat-bonding of the heat-bondable fiber, and the fiber layer (1) forms a convex structure protruded to the fiber layer (1) side between the heat-bonded parts; wherein the fiber layers (1) and (2) have different shrinking ratios.
(2) The stretchable nonwoven fabric described in the above (1), wherein the fiber layer (2) contains a conjugate fiber capable of exhibiting spiral crimping and is formed by entanglement of the conjugate fibers through the spiral crimping of the conjugate fiber;
(3) The stretchable nonwoven fabric described in the above (1) or (2), wherein the heat-bondable fiber is a conjugate fiber and joined each other by heat fusion at an intersecting point of the heat-bondable fibers between the heat-bonded parts;
(4) A process for producing a stretchable nonwoven fabric comprising laminating a fiber layer (2) containing a conjugate fiber composed of resin components different from each other to at least one surface of a fiber layer (1) containing a heat-bondable fiber, integrating both fiber layers without press-flattening fibers of both fiber layers at heat-bonded parts partly formed by heat-bonding of the heat-bondable fiber, and protruding the fiber layer (1) to the fiber layer (1) side between the heat-bonded parts to form a convex structure; wherein the fiber layers (1) and (2) have different shrinking ratios.

(5) The process described in the above (4), wherein both fiber layers are partly integrated by point-through-air processing without press-flattening the fibers of both fiber layers.

The stretchable nonwoven fabric of the invention is a stretchable nonwoven fabric, comprising a fiber layer (1) containing a heat-bondable fiber and a fiber layer (2) containing a conjugate fiber composed of resin components different from each other wherein the fiber layer (2) is laminated to at least one surface of the fiber layer (1), both fiber layers are integrated, the fibers of both fiber layers were no press-flattened at heat-bonded parts which is partly formed by heat-bonding of the heat-bondable fiber, and the fiber layer (1) forms a convex structure protruded to the fiber layer (1) side between the heat-bonded parts.

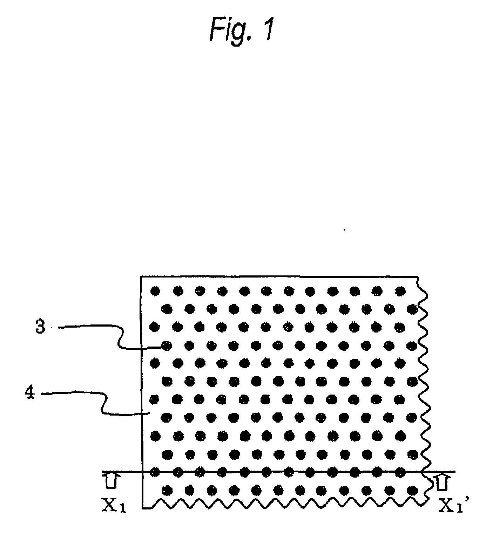

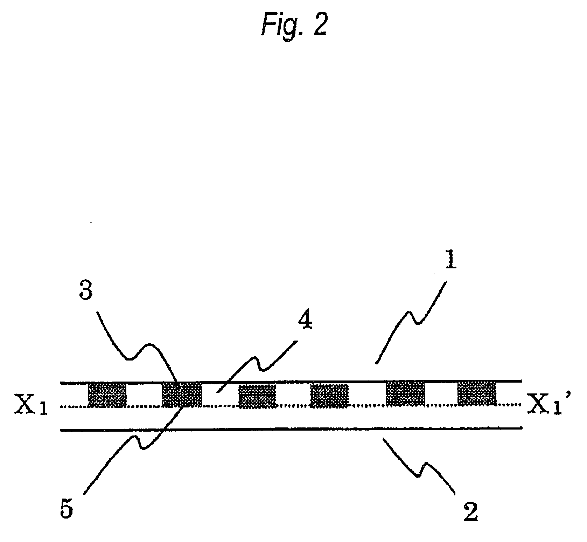

The stretchable nonwoven fabric of the invention is described with reference to Drawings. Fig. 1 is a plane schematic view of a laminated article of the fiber layer (1) and the fiber layer (2) before heat-shrink processing. Fig. 2 is a cross-sectional schematic view of a laminated article of the fiber layer (1) and the fiber layer (2) before heat-shrink processing. In Figs. 1 and 2, 3 is a heat-bonded part (a site where the heat-bondable fiber is bonded each other at its intersecting point) and 4 shows an interval between the heat-bonded parts (a site where the intersecting point of fibers of the heat-bondable fiber is not bonded). In Fig. 2, 1 is the fiber layer (1) before heat-shrink processing, 2 is the fiber layer (2) before heat-shrink processing, and $X_1$-$X_1$' is a cross-section place of the nonwoven fabric.

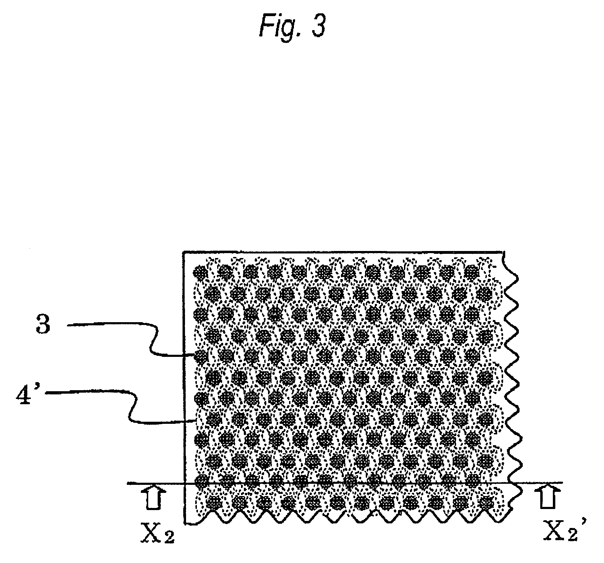

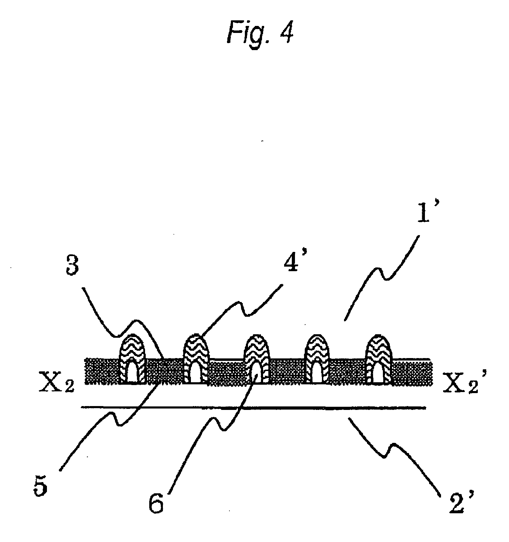

Fig. 3 is a plane schematic view of a laminated article of the fiber layer (1) and the fiber layer (2) after heat-shrink processing. Fig. 4 is a cross-sectional schematic view of a laminated article of the fiber layer (1) and the fiber layer (2) after heat-shrink processing. In Figs. 3 and 4, 3 is a heat-bonded part (a site where the intersecting point of fibers of the heat-bondable fiber is bonded) and 4' shows an interval between the heat-bonded parts after heat-shrink processing (a convex structure-formed part). In Fig. 4, 1' is the fiber layer (1) after heat-shrink processing, 2' is the fiber layer (2) after heat-shrink processing, 5 is a heat-jointed region (a heat-jointed face at interface between, the fiber layer (1) and the fiber layer (2)), $x_2$-$x_2$' is a cross-sectional place of the nonwoven fabric, and 6 is a vacant part.

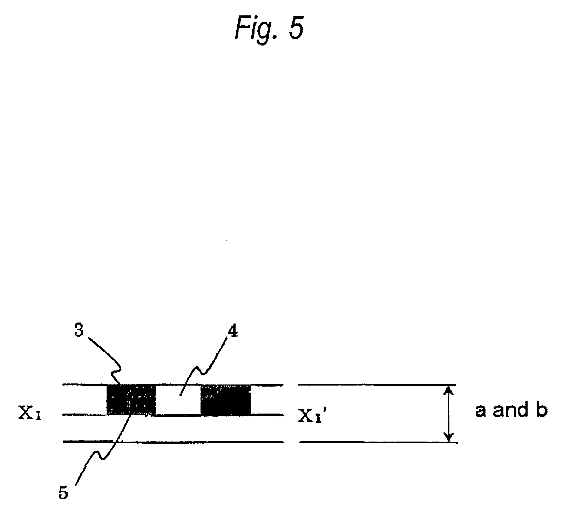

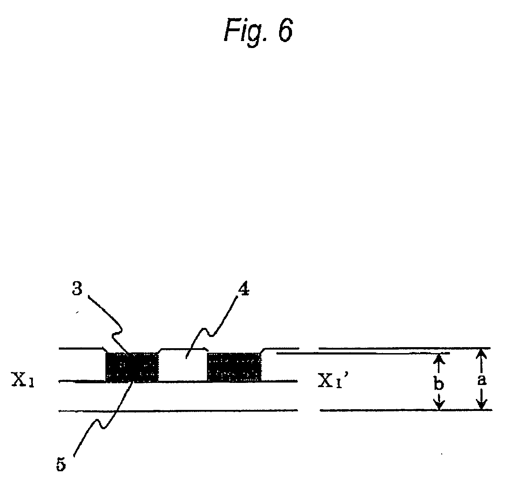

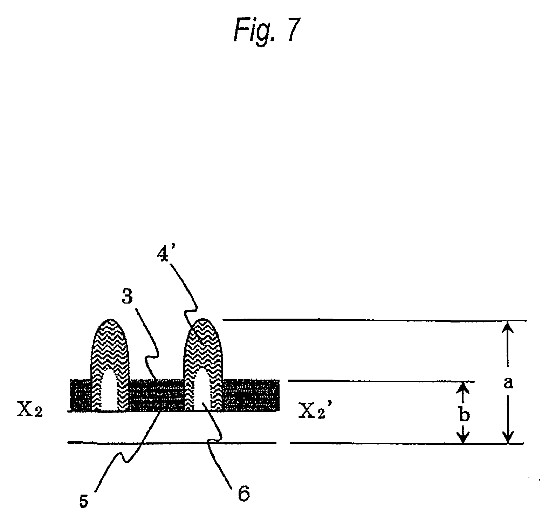

Fig. 5 is a schematic view of an example of a laminated article where there is no concavo-convex structure before heat-shrink processing. Fig. 6 is a schematic view of an example of a laminated article where there is a slight concavo-convex structure before heat-shrink processing. Fig. 7 is a schematic view of an example of a laminated article where a concavo-convex structure becomes remarkable after heat-shrink processing.

In the specification, the "heat-bonded part" refers to a part where fibers constituting the fiber layer (1) are bonded at the intersecting points or contact parts of the fibers or fibers constituting the fiber layer (1) and fibers constituting the fiber layer (2) are bonded at the intersecting points or contact parts of the fibers through melting of the low-melting component constituting the heat-bondable fiber contained in the fiber layer (I) by passing hot air through any part of the fiber web obtained by lamination of both fiber layers.

Moreover, the phrase "both fiber layers are integrated without press-flattening fibers of both fiber layers" refers to a state that fibers constituting the fiber layer (1) are bonded at a large number of the fiber intersecting points and the like or fibers constituting the fiber layer (1) and the fiber layer (2) are joined at a large number of the fiber intersecting points or contact parts at the interface between the fiber layer (1) and the fiber layer (2) by melting or softening of the low-melting point component of the heat bondable fiber contained in the fiber layer (1) while the fibers constituting the fiber layer (1) and the fiber layer (2) maintain the form of fiber web. Namely, it refers to a state that film is not formed due to hot emboss pressing.

The "interval between the heat-bonded parts" refers to a region which is a part other than the heat-bonded part and where the fibers constituting the fiber layer (1) and the fiber layer (2) are not heat-bonded.

The "convex structure" is a convex-shape structure which is formed by protrusion of the fiber layer (1) to the fiber layer (1) side as a result of shrinking of the fiber layer (2) is shrunk at the part where the heat-bonded part is not formed (interval between the heat-bonded parts) after the heat-bondable fiber is heat-bonded to form the heat-bonded part.

The state of the above heat-bonded part is a state different from the state that a fiber web is heated and pressed by contacting with a hot emboss roll or the like to flatten the shape and the low-melting component and the high-melting component are melted or softened to press-bond fibers, as in the case of the above-described conventional technologies. Therefore, the stretchable nonwoven fabric of the invention is bulky and highly flexible, has air permeability, and can exhibit stretchability, irrespective of the directions of MD and CD.

All in all, the heat-bonded parts formed in the stretchable nonwoven fabric of the invention are regularly distributed and has a certain pattern in many cases. The same thing can be said in the thickness direction of the nonwoven fabric. At the heat-bonded parts, the fiber intersecting points of fibers of the heat-bondable fiber are heat-bonded.

The fiber intersecting points of the heat-bondable fiber and non-heat-bondable fiber are heat-bonded or not heat-bonded depending on the kind of the fibers to be used. However, in order to maintain the strength as the nonwoven fabric, most part of the fiber intersecting points at the heat-bonded parts are preferably heat-bonded. Therefore, it is preferable that the amount of the non-heat-bondable fiber to be mixed in the fiber layer (1) is limited. The amount of the non-heat-bondable fiber to be mixed in the fiber layer (1) is preferably less than 50% by mass, more preferably less than 30% by mass.

The shape of the heat-bonded parts on the surface of the stretchable nonwoven fabric of the invention depends on the method for passing hot air through the fiber web containing the heat-bondable fiber, is not particularly limited. The shape may be rectangular, rhombic or the like but is preferably round. In order to enhance the strength of the nonwoven fabric, the shape is further preferably an elliptical shape having a major axis in the right angle direction toward the fiber flow direction.

The total area percentage of the heat-bonded parts on the surface of the stretchable nonwoven fabric of the invention is preferably 60% or less, more preferably 10 to 40%. By controlling the percentage within the range, the strength of the nonwoven fabric can be maintained.

The size of the heat-bonded part on the surface of the stretchable nonwoven fabric of the invention is preferably a diameter of about 1 to 4 mm in the case of round one, although the processing method should be considered. Moreover, the arrangement is preferably a zigzag pattern (chidori arrangement) but is not limited thereto.

The length of the convex structure (hereinafter, also referred to as "difference in thickness of concavity and convexity" or "degree of concavity and convexity") refers to a difference in length between a and b (a - b) in Figs. 5 to 7. The difference in thickness of concavity and convexity is measured by the method described in Examples to be mentioned later. The difference in thickness of concavity and convexity is not particularly limited from the viewpoint of designing properties but is preferably 0.1 to 5.0 mm, more preferably 0.3 to 3.0 mm from the viewpoint of extension, stretching, and texture.

The ratio of concavity and convexity (ratio of a to b = a/b in Figs. 5 to 7) is preferably 1.0 to 5.0, more preferably 1.5 to 3.5 from the viewpoint of extension, stretching, and texture.

The number of pieces of the convex structure on the stretchable nonwoven fabric of the invention is not particularly limited but the nonwoven fabric has at least one protrusion between the heat-bonded parts.

The unit weight of the stretchable nonwoven fabric of the invention is preferably 20 to 200 $g/m^2$, more preferably 30 to 150 $g/m^2$, and further preferably 50 to 100 $g/m^2$, although it depends on the fiber diameter of each constituting fiber.

By controlling the unit weight to 20 $g/m^2$ or more, handling becomes very easy and the strength of the nonwoven fabric is enhanced. Therefore, the nonwoven fabric rich in practicality is obtained. Moreover, by controlling the unit weight to 200 $g/m^2$ or less, the density of the constituting fibers of the nonwoven fabric decreases. Therefore, influence with a mutual fiber is reduced at the interval portion of the heat-bonded parts, suitability for processing is also improved, and flexibility is enhanced. Moreover, for using the nonwoven fabric as absorbing articles, the unit weight is effective in view of cost and weight saving.

The thickness of the stretchable nonwoven fabric of the invention is preferably 1.0 to 5.0 mm, more preferably 1.5 to 4.0 mm, and particularly preferably 2.0 to 3.0 mm from the viewpoint of extension, stretching, and texture.

[Fiber layer (1)]

The shrinking ratio of the fiber layer (I) is lower than the shrinking ratio of the fiber layer (2) by preferably 30% or more, more preferably 50% or more The shrinking ratio can be measured by the method in Examples to be mentioned later. By controlling a difference in shrinking ratio between the fiber layer (1) and the fiber layer (2) (shrinking ratio of the fiber layer (2) - shrinking ratio of the fiber layer (1)) to 30% or more, the surface concavo-convex shape to be formed later becomes large and hence the bulkiness of the nonwoven fabric can be increased. Therefore, the above shrinking ratio is preferable.

The heat-bondable fiber contained in the fiber layer (1) is preferably a latent crimpable conjugate fiber inferior in exhibition of spiral crimping as compared with the conjugate fiber constituting the fiber layer (2); and a non-latent-crimpable conjugate fiber or a single-component fiber which does not exhibit spiral crimping. Thereby, the shrinking ratio of the fiber layer (1) can be suppressed to 30% or more lower than the shrinking ratio of the fiber layer (2).

The heat-bondable fiber contained in the fiber layer (1) is preferably a latent crimpable conjugate fiber. When the heat-bondable fiber contained in the fiber layer (1) is a latent crimpable conjugate fiber, the convex part which is formed by protrusion of the fiber layer (1) has not only extensibility derived from the convex structure itself but also extensibility derived from the spiral crimping exhibited in a pre-treatment processing step and/or a shrink-processing step, so that flexibility and stretchability of the nonwoven fabric may become further preferable. Moreover, the extensibility derived from the protruded part of the fiber layer (I) and the extensibility of the spiral crimping of the fiber layer (2) can provide the nonwoven fabric with stretchability.

Examples of the resin to be used for the heat-bondable fiber of the fiber layer (1) include polyolefins, polyesters, and polyamides. The heat-bondable fiber constituting the fiber layer (1) may be a conjugate fiber composed of resin components different from each other.

As the heat-bondable fiber contained in the fiber layer (1) is preferably a combination of a low-melting point component and a high-melting pointcomponent, Examples of the low-melting point component/high-melting point component specifically include polyethylene/polypropylene, polypropylene copolymer/polypropylene homopolymer, and polyethylene/polyethylene terephthalate but are not limited thereto.

The polyethylene includes polyethylene homopolymer, copolymers of ethylene and propylene or the other olden, and copolymers of ethylene and the other copolymerization component(s). Moreover, the polypropylene includes polypropylene homopolymer, copolymers of propylene and ethylene or the other olefin, and copolymers of propylene and the other copolymerization component(s). Furthermore, examples of the polyesters include polyethylene terephthalate and polybutylene terephthalate and copolymers thereof.

The low-melting point component preferably has a melting point lower than that of the high-melting component by 10°C or more. Particularly in the case where the low-melting point component constituting the fiber layer (1) is a conjugate fiber, when the melting point of the low-melting point component of the conjugate fiber is properly low, heating can be performed at a low temperature when both layers are heat-bonded and integrated by heating in the pre-treatment step by making used af heat-bondability of the low-melting component. Thereby, the exhibition of spiral crimping at the conjugate fiber constituting the fiber layer (2) can be inactivated. As a result of the suppression of shrinking behavior of the fiber layer (2) induced, a sufficient retention time for formation of sufficient heat-bonding between both layers can be secured. Thus, strong bonding and integration are achieved.

In the case where the heat-bondable fiber contained in the fiber layer (1) is composed of a low-melting point component and a high-melting point component, the volume ratio (low-melting point component/high-melting point component) on the fiber cross-section in the orthogonal direction to the length of the conjugate fiber is preferably 10/90 to 90/10, further preferably 40/60 to 60/40.

Moreover, it is preferable that the heat-bondable fiber contained in the fiber layer (1) contains an elastomer component as a constituting component at least on the fiber surface thereof. Thereby, contact points of the fibers in the fiber layer (1); and contact points of the fiber constituting the fiber layer (1) and the conjugate fiber constituting the fiber layer (2) are heat-bonded through the elastomer component. Since the heat-bonded points have elasticity and have a cushioning effect against deformation induced by tensile force or the like which is applied to the nonwoven fabric, flexibility and stretchability are provided on the nonwoven fabric and also the bond strength of the bonded points is reinforced by the tackiness of the elastomer component. As a result, peeling strength between the layers also increases.

Example of the elastomer component include styrene-based elastomers, olefin-based elastomers, ester-based elastomers, methane-based elastomers and mixtures thereof.

In the fiber layer (1), within the range where the advantage of the invention is not inhibited, wood fibers; natural fibers; chemical fibers such as rayon and acetate fibers; synthetic fibers such as polyester fibers, acrylic fibers (polyacrylonitrile-based ones), Nylon fibers, and polyvinyl chloride fibers; and the like may be mixed.

The fineness of the fiber to be used in the fiber layer (1) is preferably 1.0 to 11 dtex, more preferably 1.5 to 5.5 dtex. Moreover, the fiber to be used in the fiber layer (1) may be either a continuous fiber (long fiber) or a short fiber but is preferably a short fiber. Also, the fiber length of the fiber to be used in the fiber layer (1) is preferably 10 to 120 mm. more preferably 30 to 60 mm.

It is effective that the fiber to be used in the fiber layer (1) has low fiber rigidity in order to facilitate the formation of the convex structure, Also, when flexibility of the nonwoven fabric is considered, it is desirable to select a relatively small fineness.

In the case where the fiber to be contained in the fiber layer (1) is a conjugate fiber, the cross-sectional shape is not particularly limited but examples thereof include concentric sheath-core type one, eccentric sheath-core type one, and side-by-side type one. Among them, eccentric sheath-core type one and side-by-side type one are preferred, and side-by-side type one is particularly preferred. This is because a highly latent crimpable fiber is obtained by using a conjugate fiber having a side-by-side type cross-sectional shape.

The unit weight of the fiber layer (1) is preferably 5 to 30 $g/m^2$ more preferably 10 to 20 $g/m^2$, although it depends on the fiber diameter of the constituting fiber.

[Fiber layer (2)]

The fiber layer (2) is a fiber layer containing a conjugate fiber composed of resin components different from each other. The conjugate fiber is preferably a conjugate fiber capable of exhibiting spiral crimping, more preferably a latent crimpable conjugate fiber,

The latent crimpable conjugate fiber preferably exhibits spiral crimping in a thermal treatment at 110°C. The apparent shrinking ratio of the fiber layer (2) due to the exhibition of the spiral crimping is preferably 40% or more, more preferably 60% or more.

Since by controlling the shrinking ratio to 40% or more, a sufficient shrinking force is obtained, the fiber layer (1) can be prevented from becoming difficult to be protruded, Moreover, since by controlling the shrinking ratio to 40% or more, the exhibition of the spiral crimping becomes sufficient, a decrease in extensibility of the fiber layer (2) can be prevented. The upper limit is not particularly limited but a sufficient dimensional stability of products is obtained by controlling the shrinking ratio to less than 80%.

Examples of the resin to be used as the conjugate fiber contained in the fiber layer (2) include polyolefins, polyesters, and polyamides.

As the resin components different from each other constituting the conjugate fiber contained in the fiber layer (2), a combination of a low-melting point component and a high-melting point component may be exemplified. The low-melting point component preferably has a melting point lower than that of the high-melting point component by 10°C or more.

Examples of the low-melting point component/high-melting point component specifically include polyethylene/polypropylene, polypropylene copolymer/polypropylene homopolymer, and polyethylene/polyethylene terephthalate but are not limited thereto.

The polyethylene includes polyethylene homopolymer, copolymers of ethylene and propylene or the other olefin, and copolymers of ethylene and the other copolymerization component(s). Moreover, the polypropylene includes polypropylene homopolymer, copolymers of propylene and ethylene or the other olefin, and copolymers of propylene and the other copolymerization component(s). Furthermore, examples of the polyesters include polyethylene terephthalate and polybutylene terephthalate, and copolymers thereof.

In the case where the conjugate fiber contained in the fiber layer (2) is composed of a low-melting point component and a high-melting point component, the volume ratio (low-melting point component/high-melting point component) on the fiber cross-section in the orthogonal direction to the length of the conjugate fiber is preferably 10/90 to 90/10, further preferably 40/60 to 60/40.

The conjugate fiber contained in the fiber layer (2) may contains an elastomer component. Examples of the elastomer component include styrene-based elastomers, olefin-based elastomers, ester-based elastomers, and urethane-based elastomers, and mixtures thereof.

In the fiber layer (2). within the range where the advantage of the invention is not inhibited, wood fibers; natural fibers; chemical fibers such as rayon and acetate fibers; synthetic fibers such as polyester fibers, acrylic fibers (polyacrylonitrile-based ones), Nylon fibers, and polyvinyl chloride fibers; and the like may be mixed.

The fineness of the fiber to be used in the fiber layer (2) is preferably 1.0 to 11 dtex, more preferably 1.5 to 5,5 dtex. Moreover, the fiber to be used in the fiber layer (2) may be either a continuous fiber (long fiber) or a short fiber but is preferably a short fiber. Also, the fiber length of the fiber to be used in the fiber layer (2) is preferably 10 to 120 mm, more preferably 30 to 60 mm.

The cross-sectional shape of the conjugate fiber contained in the fiber layer (2) is not particularly limited but examples thereof include concentric sheath-core type one, eccentric sheath-core type one, and side-by-side type one. Among them, eccentric sheath-core type one and side-by-side type one are preferable. This is because a highly latent crimpable fiber is obtained by using a conjugate fiber in which the cross-sectional shapes is an eccentric sheath-core type or side-by-side type.

The unit weight of the fiber layer (2) is preferably 5 to 50 g/m$^2$, more preferably 10 to 30 g/m$^2$, although it depends on the fiber diameter of the constituting fiber.

The ratio of the unit weight of the fiber layer (2) to the fiber layer (1) is preferably 60/40 to 10/90, more preferably 50/50 to 30/70. By controlling the ratio of the fiber layer (1) to be the upper range or less, as the spiral crimping of the fiber contained in the fiber layer (2) is exhibited, the fiber layer (2) is sufficiently shrunk and the fiber layer (1) can be sufficiently protruded. Moreover, by controlling the ratio of the fiber layer (2) to be the upper range or less, the dimensional stability of products can be sufficiently maintained.

[Production process]

The stretchable nonwoven fabric of the invention is produced by laminating a fiber layer (2) comprising a conjugate fiber composed of resin components different from each other to at least one surface of a fiber layer (1) comprising a heat-bondable fiber, partly integrating both fiber layers by heat-bonding both fiber layers without press-flattening fibers of both fiber layers, and protruding the fiber layer (1) to the fiber layer (1) side between the heat-bonded parts to form a convex structure.

Specifically, the integration (hereinafter, sometimes referred to as "pre-treatment processing") is achieved by laminating the fiber layer (2) comprising a conjugate fiber capable of exhibiting spiral crimping and the fiber layer (1) comprising a heat-bondable fiber which is inferior in ability of exhibiting spiral crimping as compared with the conjugate fiber contained in the fiber layer (2) or does not exhibit spiral crimping; and partly bonding them without press-flattening.

Furthermore, by subjecting the whole surface of the resulting nonwoven fabric to a thermal treatment once again, the fiber layer (1) is protruded to the surface of the nonwoven fabric on the fiber layer (1) side between the bonded parts partly formed as described above to form a convex shape (hereinafter, sometimes referred to as "shrink-processing") due to the shrinkage derived from the exhibition of the spiral crimping of the fiber used in the fiber layer (2).

(Lamination method)

Each of fiber layer is preferably laminated in a web state that respective constituting fibers are not integrated. The method of web formation is not particularly limited. Examples thereof include a carding method and an air laid method. In view of forming a convex structure, the carding method is preferable.

The dispersed state of fibers in each fiber layer is not particularly limited and the fibers may not be arranged in one direction or may be randomly dispersed. However, from the viewpoint of stretching in all directions irrespective of the directions of MD and CD, the fibers are preferably dispersed randomly.

The "random" herein indicates arrangement of the fibers forming the web and refers to a low regularity in arrangement of the fibers. In the case where carding is performed by such a metallic wire of a carding machine, the randomness in the arrangement of the fibers is generally regulated by a speed ratio of individual rollers. A state that the arrangement of the fibers in one direction is loosened of a web obtained by such a method is also in the category of the "random" in the specification.

At the time of laminating both fiber layers, the relation of the arranged state of the fibers in both layers is not particularly limited and the layers may be laminated so that the fibers of both layers are arranged almost in the same direction or may not be laminated as such. From the viewpoint of stretching in all directions irrespective of the directions of MD and CD, the layers are preferably laminated so that both fiber layers are randomly arranged.

(Integration method)

As a method of partly integrating the fiber layer (1) and the fiber layer (2) without press-flattening in the pre-treatment processing step, for example, a method for integrating both layers by sandwiching a laminated nonwoven fabric between a transferring conveyer of a common hot-air circulating through-air apparatus and a stainless steel belt subjected to arbitrary punching (hereinafter referred to as a punching belt) and applying hot air thereto to allow the hot air to penetrate only through the punching parts (openings) ("sites to be heat-bonded parts" later) can be used. The hot air may be allowed to penetrate using a roller having holes instead of the punching belt.

Hereinafter, the pre-treatment processing performed using a through-air apparatus is sometimes referred to particularly as "point-through-air processing". Moreover, in the following, as a method for the pre-treatment processing step, specific methods mainly comprising performing the point-through-air processing will be described but the pre-treatment processing is not limited to the point-through-air processing.

The point-through-air processing is actually carried out while the punching belt is in close contact with the nonwoven fabric so that the hot air passed through the openings of the punching belt does not permeates between the body of the punching belt and the nonwoven fabric. In this processing, to the site of the nonwoven fabric in close contact with the punching belt, own weight of the punching belt itself or a pressure through the punching belt may be applied to such a degree that fibers in the nonwoven fabric is not flattened. In addition, by the own weight or pressure may suppress exhibition of crimping of the fiber constituting the fiber layer (2) at the point-through-air processing,

However, the crimping of the conjugate fiber constituting the fiber layer (2) at the site to which the hot air is applied by the point-through-air processing is not completely suppressed, and it is considered that the very weak crimping is exhibited.

The crimping of the fiber layer (2) results in lifting-up of the fiber layer (1) wholly upward. Accordingly, it is considered that a slight vacant part is formed between the fiber layer (1) and the fiber layer (2) where no crimping is exhibited, at the site where the hot air is blocked by the punching belt (later, the site becomes an interval between the heat-bonded parts").

The point-through-air processing is preferably carried out under temperature conditions where the exhibition of the spiral crimping of the conjugate fiber contained in the fiber layer (2) is not active and the low-melting point component of the conjugate fiber is not thermally melted as well as, and the low-melting point component at least constituting the fiber surface of the conjugate fiber contained in the fiber layer (1) is melted or softened to such a degree that the component can participate in the heat-bonding.

When the point-through-air processing is performed at a temperature where the low-melting point component of the fiber layer (2) is melted, since thermal melting at the site through which the hot air is allowed to penetrate, i.e., a part to be point-bonded, proceeds excessively, the nonwoven fabric becomes hard and exhibits an impaired texture. Moreover, since the shrinkage of the fiber layer (2) becomes strong, kink is formed in the nonwoven fabric to deteriorate the texture. Therefore, it becomes important to select a component capable of participating with the thermal bonding at a temperature where the exhibition of the spiral crimping of the fiber layer (2) is not activated as a low-melting point component of the fiber layer (1).

Preferable examples of the low-melting point component of the fiber layer (1) includes LDPE and L-LDPE. The melting point of the low-melting point component of the fiber layer (1) is preferably 70°C or higher to 125°C or lower, more preferably 90°C or higher to 110°C or lower.

Examples of the low-melting point component of the fiber layer (2) include propylene copolymers and ethylene copolymers and an ethylene-propylene copolymer is particularly preferable. The melting point of the low-melting point component of the fiber layer (2) is preferably higher, more preferably 10°C or more higher than the melting point of the low-melting point component of the fiber layer (1). The temperature range of the melting point of the low-melting point component is preferably 120°C to 150°C, more preferably 130°C to 140°C.

(Shrink-processing)

For the shrink-processing, a common hot-air circulating through-air apparatus can be used. The processing temperature at the shrink-processing may be higher than, the same as, or lower than the processing temperature at the point-through-air processing so long as the nonwoven fabric having a structure of the invention is obtained. The preferable range is 100°C or higher to 130°C or lower.

In the shrink-processing step performed by applying hot air uniformly to the whole surface of the nonwoven fabric after the point-through-air processing, even when the temperature of the hot air is the same as or higher than the temperature of the hot air at the point-through-air processing, a phenomenon that the fiber layer (1) and the fiber layer (2) at a site where the hot air is blocked at the above point-through-air processing are newly integrated by heat-bonding of the fiber constituting the fiber layer (1) is not observed.

As mentioned above, at the site where the hot air is blocked at the above point-through-air processing, it seems that a vacant part which is formed between the fiber layer (1) and the fiber layer (2) at the site is considered to bring about an effect of inhibiting the contact of both layers and plays a function of blocking the bonding and integration of both layers. Thereby, the fiber of the fiber layer (1) at the site where the hot air is blocked during the above point-through-air processing can behave independently of the fiber layer (2).

As a result, when the fiber of the fiber layer (1) receives a stress induced by the shrinkage of the fiber layer (2) involved in the exhibition of strong crimping of the fiber of the fiber layer (2), it is considered that the fiber of the fiber layer (1) cannot follow the shrinkage and is protruded to the surface of the nonwoven fabric on the fiber layer (1) side to form a convex shape independent of the fiber layer (2), while fibers of the fiber layer (1) are bonded each other by thermal melting or thermal softening of the bonding component of the fiber.

Moreover, even when the temperature at the shrink-processing is the same as or higher than the temperature of the hot air at the point-through-air processing, as another reason why the fiber layer (1) and the fiber layer (2) are not heat-bonded and integrated at the site of the nonwoven fabric where the hot air is blocked at the above point-through-air processing, it is considered as one reason that the formation of heat-bonding of the fiber of the fiber layer (1) to the conjugate fiber constituting the fiber layer (2) by thermal melting or thermal softening of the former fiber does not follow the movement of the fiber of the fiber layer (2) accompanied with the exhibition of crimping since the crimpability of the fiber constituting the fiber layer (2) is sufficiently large at the shrink-processing.

Furthermore, in the case where the fiber constituting the fiber layer (1) is a conjugate fiber having a side-by-side type structure, it is considered as one reason that since a high-melting point component which is not involved in heat-bonding may occupy the effective amount of the fiber surface, and therefore a chance that a low-melting point component capable of participating with the heat bonding may actually participate with the heat bonding decreases as a whole, an absolute amount of heat-bonded points between the fiber layer (1) and the fiber layer (2) also decreases.

The point-tbrough-air processing includes bonding of two layers of webs without press flattening, The stretchable nonwoven fabric of the invention obtained by the method tends to be one wherein a critical border of the bonded state of the heat-bonded part and the interval between the heat-bonded parts at the boundary between the site where hot air is applied and the site where hot air is blocked is clear.

Therefore, at the site where the hot air is blocked, the stress induced by the shrinkage generated in the fiber layer (2) during the shrink-processing step tends to be uniformly transmitted to the critical border with the site where the hot air is applied, without large loss.

Since the transmission of the stress was dammed at the critical border with the site where the hot air is applied, it is considered that the transmission of the stress is developed to the convex shape formation of the fiber layer (1) with the momentum. Therefore, at the boundary part, the convex structure tends to rise up at a sharp angle. Accordingly, in the case of using it particularly as a Hook-and-Loop fastener, the nonwoven fabric shows a good hooking ability due to the convex structure and thus is preferable.

On the other hand, as a method for integrating the same two layers, a pressing method by thermal emboss processing is generally applied. In this case, by the pressing with the convex part of an emboss roll, the fiber layer at the site which has not been pressed (convex part) is pulled by a pressing force and fixed in a state of tension at a slope face formed at the boundary with the pressed part (filmed concave part). Moreover, an incomplete heat-bonded state tends to be formed near the boundary (particularly the slope face) between the site which has been pressed and the site which has not been pressed as compared with the center of the pressed part.

Therefore, even when the fiber layer (2) at the site which has not been pressed is shrunk in the shrinking step which is sequentially carried out, it seems that the stress induced by the shrinkage is consumed/absorbed for tension relaxation of the fiber present at the slope face of the fiber layer (1) and also the stress involved in the shrinkage of the fiber layer (2) is dispersed particularly at the slope face due to a slow transition of the heat-bonded state at the slope face particularly from the non-pressed part to the pressed part.

Therefore, in the non-heat-bonded region, by the stress induced by the shrinkage of the fiber layer (2), the convex part by the fiber layer (1) formed on the surface on the fiber layer (1) side tends to rise up at a gradual angle from an unclear starting point near the heat-pressed part.

Accordingly, due to the structure, in the case of using of the fabric obtained using the pressing method by thermal emboss pressing as a Hook-and-Loop fastener, hooking is difficult and a sufficient fastener performance is difficult to obtain. Moreover, the product is different in texture and physical properties from the nonwoven fabric of the invention having stretchability and flexibility.

Moreover, since voids between the fibers are crushed at the thermally emboss-processed part, air permeability as a whole nonwoven fabric is remarkably decreased. However, at the heat-bonded part in the stretchable nonwoven fabric of the invention, since the fibers are bonded only at the intersecting points, the voids are not impaired and therefore the nonwoven fabric has a characteristic feature that good air permeability can be maintained.

The stretchable nonwoven fabric of the invention has concavo-convex structure on the surface, is bulky and highly flexible, has air permeability, and is capable of imparting stretchability in both directions of MD and CD. Therefore, the nonwoven fabric can utilize in hygienic material fields such as bandages, base materials for plaster materials, and female materials for Hook-and-Loop fasteners, medical fields, and industrial material fields.

Examples

The following will describe the invention in more detail with reference to Examples but the invention is not limited to these Examples.

[Measurement method]

The stretchable laminate sheets produced by Examples and Comparative Examples were evaluated by the following measurement methods.

<Measurement method for shrinking ratio>

(a) Fiber layer (1) and fiber layer (2)

The length of a sample before thermal treatment was measured at three places (measured at central part and both ends) in the direction of MD and an average value thereof was regarded as (A) value. Then, after thermal treatment, the length was also measured similarly at the same places and an average value thereof was regarded as (B) value. A shrinking ratio was calculated according to the following formula. Also in the direction of CD, a shrinking ratio was determined by the same measurement method.

$$\text{Shrinking ratio (\%)} = ((A) - (B))/(A) \times 100$$

(b) Nonwoven fabric

A nonwoven fabric was cut into a size of 25x25 cm (area: 625 cm$^2$). After thermal treatment, the area of the nonwoven fabric was calculated and regarded as (C) value and a shrinking ratio was determined according to the following formula.

$$\text{Shrinking ratio (\%)} = ((625) - (C))/(625) \times 100$$

<Evaluation method for extensibility and flexibility>

Using "Autograph AG500D" manufactured by Shimadzu Corporation, a sample was extended from a sample length of 100 mm to a 50% extended length at a rate of 100 m/min and then returned to the sample length. Loads until 50% extension were measured at two points of first time and second time to determine strengths at 10%, 20%, 30%, 40%, and 50% extension. Then, a graph plotting in which strength as ordinate axis and strain as abscissa axis (S-S curve) was made.

The larger the difference between the load at first time and the load at second time is, the lower the extensibility is. Moreover, in the graph of extension versus load, the following was judged: the larger the slope is, the lower the flexibility is.

<Evaluation method for degree of concavity and convexity>

A nonwoven fabric was vertically cut so that the centers of the convex parts of the nonwoven fabric was cut and the thickness of the concave part and the thickness of the convex part were measured using a digital microscope "VHX-900" manufactured by KEYENCE Corporation. The average of the difference in thickness was determined from values at 10 places.

[Example 1]

Using a side-by-side type conjugate fiber consisting of propylene having a melting point of 160°C and an ethylene-propylene copolymer having a melting point of 130°C (volume ratio: 50/50), a fiber layer (2) having a unit weight of 10 g/m$^2$ was formed by a carding method. The shrinking ratio of the fiber layer (2) was 70%.

Using a concentric sheath-core type conjugate fiber consisiting of propylene having a melting point of 160°C and L-LDPE having a melting point of 100°C (volume ratio: 50/50), a fiber layer (1) having a unit weight of 10 g/m$^2$ was formed by a carding method. The shrinking ratio of the fiber layer (1) was 5%.

The fiber layer (1) was laminated on the fiber layer (2) so that the machine directions of the respective fiber layers were the same direction, thereby forming a bilayer web. A punching plate where round holes having a diameter of 3 mm were made in a zigzag pattern (chidori arrangement) at pitch intervals of 5 mm (open area ratio: 32.6%) was placed on the resulting bilayer web, and point-through-air processing was performed at a processing temperature of 120°C for 10 seconds in a hot-air circulating through-air machine (manufactured by Kotobuki industries Co., Ltd.). The shrinking ratio at this time was 7% in MD and 3% in CD.

Then, the punching plate was removed and the resulting fabric was again subjected to a thermal treatment at a processing temperature of 120°C for 10 seconds in the hot-air circulating through-air machine to obtain a stretchable nonwoven fabric having a shrinking ratio of 67%. Table 1 shows such as the physical properties of the stretchable nonwoven fabric,

[Example 2]

Using a side-by-side type conjugate fiber composed of propylene having a melting point of 160°C and an ethylene-propylene copolymer having a melting point of 130°C (volume ratio: 50/50), a fiber layer (2) having a unit weight of 20 g/m$^2$ was formed by a carding method. The shrinking ratio of the fiber layer (2) was 70%.

A fiber layer (1) consisting of a concentric sheath-core type conjugate fiber composed of propylene having a melting point of 160°C and L-LDPE having a melting point of 100°C (volume ratio: 40/60) and rayon mixed in an amount of 10% therein, the layer having a unit weight of 10 g/m$^2$, was formed by a carding method. The shrinking ratio of the fiber layer (1) was 0%.

The fiber layer (1) was laminated on the fiber layer (2) so that the machine directions of the respective fiber layers were the same direction, thereby forming a bilayer web. The resulting bilayer web was subjected to point-through-air processing in the same manner as in Example 1. The shrinking ratio at this time was 5% in MD and 3% in CD.

Then, the punching plate was removed and the resulting fabric was again subjected to a thermal treatment at a processing temperature of 120°C for 10 seconds in the hot-air circulating through-air machine to obtain a stretchable nonwoven fabric having a shrinking ratio of 62%. Table 1 shows the physical properties and the like of the stretchable nonwoven fabric.

[Comparative Example 1]

Using a side-by-side type conjugate fiber consisting of propylene having a melting point of 160°C and an ethylene-propylene copolymer having a melting point of 130°C (volume ratio: 50/50), a fiber layer (2) having a unit weight of 10 g/m$^2$ was formed by a carding method. The shrinking ratio of the fiber layer (2) was 70%.

Using a concentric sheath-core type conjugate fiber consisting of propylene having a melting point of 160°C and L-LDPE having a melting point of 100°C (volume ratio: 50/50), a fiber layer (1) having a unit weight of 10 g/m$^2$ was formed by a carding method. The shrinking ratio of the fiber layer (1) was 5%.

The fiber layer (1) was laminated on the fiber layer (2) so that the machine directions of the respective fiber layers were the same direction to form a bilayer web. The bilayer web was heat-pressed with a hot emboss having an area ratio of 15% (processing temperature: 95°C) to obtain a nonwoven fabric. The shrinking ratio of the nonwoven fabric was 40% in MD and 26% in CD. Table 1 shows such as the physical properties of the resulting nonwoven fabric.

[Comparative Example 2]

Using a side-by-side type conjugate fiber consisting of propylene having a melting point of 160°C and an ethylene-propylene copolymer having a melting point of 130°C (volume ratio: 50/50), a web having a unit weight of 80 g/m$^2$ was formed by a carding method. The web was entangled by applying a jet water stream of 7.84 MPa by means of a water jet processing machine (manufactured by Daisho Tekkosho Co., Ltd.) and then dries and shrunk in a hot-air circulating through-air machine (manufactured by Kotobuki industries Co., Ltd.) to obtain a nonwoven fabric. The shrinking ratio of the nonwoven fabric was 22% in MD and 9.4% in CD. Table 1 shows such as the physical properties of the resulting nonwoven fabric.

[Table 1]

| | | Shrinking ratio measurement (%) | | | Extension strength (N/5 cm) | | | | | | Difference in thickness of concavity and convexity (mm) | Apparent specific volume (g/cm$^3$) |
|---|---|---|---|---|---|---|---|---|---|---|---|---|
| | | Heat-shrink (web) | Heat-shrink (nonwoven fabric) | | 10% | 20% | 30% | 40% | 50% | | | |
| Example 1 | Fiber layer (1)<br>Fiber layer (2) | 5<br>70 | 67 | First<br>Second | 1.1<br>0.3 | 2.5<br>1.3 | 4.4<br>2.7 | 6.5<br>4.9 | 8.6<br>8.2 | 1.15 | 53.4 |
| Example 2 | Fiber layer (1)<br>Fiber layer (2) | 0<br>70 | 62 | First<br>Second | 0.9<br>0.1 | 2.1<br>0.9 | 4<br>2.2 | 6.5<br>4.3 | 10.8<br>10.2 | 1.05 | 49.5 |
| Comparative Example 1 | Fiber layer (1)<br>Fiber layer (2) | 5<br>70 | 33 | First<br>Second | 4.0<br>-0.2 | 12.2<br>1.1 | 22.6<br>7.2 | 39.2<br>19.5 | 62.8<br>59.4 | 1.27 | 40.3 |
| Comparative Example 2 | Fiber layer (1)<br>Fiber layer (2) | -<br>- | 15.7 | First<br>Second | 5.6<br>-0.1 | 13.1<br>0.2 | 21.5<br>8.2 | 26.9<br>15.5 | 35.5<br>24.8 | 0 | 23.3 |

As shown in Table 1, the nonwoven fabrics of Examples 1 and 2 produced by point-through-air processing were nonwoven fabrics highly flexible, rich in extensibility, and good in texture, since both fiber layers are integrated without press-flattening of the fibers of both fiber layers at the heat-bonded parts which were partly formed by heat-bonding of the heat-bondable fiber and fibers are bonded only at the intersecting points. Moreover, the nonwoven fabric of Example 2 became a stretchable bulky nonwoven fabric showing a liquid absorbability by the effect of rayon mixing.

On the other band, in the nonwoven fabric of Comparative Example 1 produced by thermal emboss processing, since the heat-bonded parts were press-flattened and compressed, air permeability was remarkably impaired. Moreover, since the intervals between the heat-bonded parts were also compressed with vacant walls between the hot rolls, the nonwoven fabric became poor in both of bulkiness and flexibility and low in stretchability. Furthermore, in the nonwoven fabric of Comparative Example 2 produced by water jet processing, since the fibers of both fiber layers was integrated through entanglement by entangling the fibers with jet water stream, the nonwoven fabric was good in flexibility but was extremely poor in bulkiness and stretchability.

**Claims**

1. A stretchable nonwoven fabric, comprising a fiber layer (1) containing a heat-bondable fiber and a fiber layer (2) containing a conjugate fiber composed of resin components different from each other wherein the fiber layer (2) is laminated to at least one surface of the fiber layer (1), both fiber layers an integrated, the fibers of both fiber layers were no press-flattened at heat-bonded parts which is partly formed by heat-bonding of the heat-bondable fiber, and the fiber layer (1) forms a convex structure protruded to the fiber layer (1) side between the heat-bonded parts, wherein the fiber layer (1) and the fiber layer (2) have different shrinking ratios.

2. The stretchable nonwoven fabric according to claim 1, wherein the fiber layer (2) contains a conjugate fiber capable of exhibiting spiral crimping and is formed by entanglement of the conjugate fibers through the spiral crimping of the conjugate fiber.

3. The stretchable nonwoven fabric according to claim 1 or 2, wherein the heat-bondable fiber is a conjugate fiber and joined each other by heat fusion at an intersecting point of the heat-bondable fibers between the heat-bonded parts.

4. The stretchable nonwoven fabric according to any one of the claims 1 to 3, wherein the shrinking ratio of the fiber layer (1) is lower than the shrinking ratio of the fiber layer (2) by 30% or more.

5. A process for producing a stretchable nonwoven fabric comprising laminating a fiber layer (2) containing a conjugate fiber composed of resin components different from each other to at least one surface of a fiber layer (1) containing a heat-bondable fiber, integrating both fiber layers without press-flattening fibers of both fiber layers at heat-bonded parts partly formed by heat-bonding of the heat-bondable fiber, and protruding the fiber layer (1) to the fiber layer (1) side between the heat-bonded parts to form a convex structure, wherein the fiber layer (1) and the fiber layer (2) have different shrinking ratios.

6. The process according to claim 5, wherein both fiber layers are partly integrated by point-through-air processing without press-flattening the fibers of both fiber layers.

**Patentansprüche**

1. Dehnbares Vlies, umfassend eine Faserschicht (1), umfassend eine wärmebindbare Faser, und eine Faserschicht (2), umfassend eine Konjugatfaser, die sich aus Harzkomponenten zusammensetzt, die voneinander verschieden sind, worin die Faserschicht (2) an zumindest einer Oberfläche der Faserschicht (1) laminiert ist, beide Faserschichten integriert sind, die Fasern von beiden Faserschichten an wärmegebundenen Teilchen nicht unter Druck abgeflacht sind, die teilweise durch Wärmebinden der wärmebindbaren Faser gebildet sind, und die Faserschicht (1) eine konvexe Struktur bildet, die sich zu der Seite der Faserschicht (1) zwischen den wärmegebundenen Teilen erstreckt, worin die Faserschicht (1) und die Faserschicht (2) unterschiedliche Schrumpfungsverhältnisse haben.

2. Dehnbares Vlies nach Anspruch 1, worin die Faserschicht (2) eine Konjugatfaser enthält, die in der Lage ist, ein spirales Kräuseln zu entfalten und durch Verwirrung der Konjugatfasern durch die spirale Kräuselung der Konjugatfaser gebildet ist.

**3.** Dehnbares Vlies nach Anspruch 1 oder 2, worin die wärmebindbare Faser eine Konjugatfaser ist und durch Wärmefusion an einem sich überschneidenden Punkt der wärmebindbaren Fasern zwischen den wärmegebundenen Teilen gebunden ist.

**4.** Dehnbares Vlies nach einem der Ansprüche 1 bis 3, worin das Schrumpfungsverhältnis der Faserschicht (1) um 30% oder mehr geringer ist als das Schrumpfungsverhältnis der Faserschicht (2).

**5.** Verfahren zur Erzeugung eines dehnbaren Vlieses, umfassend das Laminieren einer Faserschicht (2), umfassend eine Konjugatfaser, die sich aus Harzkomponenten zusammensetzt, die voneinander verschieden sind, an zumindest eine Oberfläche einer Faserschicht (1), umfassend eine wärmebindbare Faser, Integrieren beider Faserschichten ohne Druckabflachen der Fasern von beiden Faserschichten an wärmegebundenen Teilen, die teilweise durch Wärmebinden der wärmebindbaren Faser gebildet sind, und Erstrecken der Faserschicht (1) zu der Seite der Faserschicht (1) zwischen den wärmegebundenen Teilen, unter Bildung einer konvexen Struktur, worin die Faserschicht (1) und die Faserschicht (2) unterschiedliche Schrumpfungsverhältnisse haben.

**6.** Verfahren nach Anspruch 5, worin beide Faserschichten teilweise durch Punkt-durch-Luft-Verarbeitung ohne Druckabflachung der Fasern beider Faserschichten integriert sind.

**Revendications**

**1.** Étoffe non tissée étirable, comprenant une couche de fibres (1) contenant une fibre liable à la chaleur et une couche de fibres (2) contenant une fibre conjuguée composée de composants résineux différents les uns des autres, dans laquelle la couche de fibres (2) est stratifiée sur au moins une surface de la couche de fibres (1), les deux couches de fibres sont intégrées, les fibres des deux couches de fibres n'ont pas été aplaties à la presse au niveau de parties liées à la chaleur qui sont partiellement formées par liaison à la chaleur de la fibre liable à la chaleur, et la couche de fibres (1) forme une structure convexe faisant saillie jusqu'au côté de la couche de fibres (1) entre les parties liées à la chaleur, dans laquelle la couche de fibres (1) et la couche de fibres (2) ont des taux de rétractabilité différents.

**2.** Étoffe non tissée étirable selon la revendication 1, dans laquelle la couche de fibres (2) contient une fibre conjuguée apte à afficher un crêpage en spirale et est formée par enchevêtrement des fibres conjuguées par l'intermédiaire du crêpage en spirale de la fibre conjuguée.

**3.** Étoffe non tissée étirable selon la revendication 1 ou 2, dans laquelle la fibre liable à la chaleur est une fibre conjuguée et jointe les unes aux autres par fusion à la chaleur au niveau d'un point d'intersection des fibres liables à la chaleur entre les parties liées à la chaleur.

**4.** Étoffe non tissée étirable selon l'une quelconque des revendications 1 à 3, dans laquelle le taux de rétractabilité de la couche de fibres (1) est inférieur au taux de rétractabilité de la couche de fibres (2) de 30% ou plus.

**5.** Procédé de production d'une étoffe non tissée étirable comprenant la stratification d'une couche de fibres (2) contenant une fibre conjuguée composée de composants résineux différents les uns des autres sur au moins une surface d'une couche de fibres (1) contenant une fibre liable à la chaleur, l'intégration des deux couches de fibres sans aplatissement à la presse des fibres des deux couches de fibres au niveau de parties liées à la chaleur partiellement formées par liaison à la chaleur de la fibre liable à la chaleur, et la mise en saillie de la couche de fibres (1) jusqu'au côté de la couche de fibres (1) entre les parties liées à la chaleur pour former une structure convexe, dans lequel la couche de fibres (1) et la couche de fibres (2) ont des taux de rétractabilité différents.

**6.** Procédé selon la revendication 5, dans lequel les deux couches de fibres sont partiellement intégrées par traitement par air chaud sans aplatissement à la presse des fibres des deux couches de fibres.

## Fig. 1

*Fig. 2*

*Fig. 3*

3

4'

X₂                                    X₂'

## Fig. 4

Fig. 5

*Fig. 6*

*Fig. 7*

**EP 2 384 881 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030134094 A
- US 5491016 A
- US 6066221 A
- JP 2009256856 A
- JP 10114004 A
- JP 2006045724 A
- JP 2001003253 A